# EUROPÄISCHE PATENTSCHRIFT

(11) **EP 1 451 050 B1**
(45) Veröffentlichungstag und Bekanntmachung des Hinweises auf die Patenterteilung: **31.08.2005**
(21) Anmeldenummer: 02782918.3
(22) Anmeldetag: 16.10.2002
(51) Int. Cl.: B60T 8/40, B60T 13/68, B60T 11/20

(54) **ELEKTROHYDRAULISCHES BREMSSYSTEM**
ELEKTROHYDRAULIC BRAKING SYSTEM
SYSTEME DE FREINAGE ELECTRO-HYDRAULIQUE

(30) Priorität: 05.12.2001 DE 10159788
(43) Veröffentlichungstag der Anmeldung: 01.09.2004
(73) Patentinhaber: DaimlerChrysler AG, 70567 Stuttgart (DE)
(72) Erfinder: NIEMANN, Ekkehard, 63454 Hanau (DE); BICKEL, Boris, 70329 Stuttgart (DE)
(86) Internationale Anmeldenummer: PCT/EP2002/011542
(87) Internationale Veröffentlichungsnummer: WO 2003/047936

(56) Entgegenhaltungen:
- WO-A-00/43246
- WO-A-01/72566
- WO-A-92/18361
- WO-A-98/12086
- WO-A-98/45151
- WO-A-02/064409
- DE-A- 3 237 959
- DE-A- 3 726 798
- DE-A- 19 822 411
- US-A- 6 050 653
- PATENT ABSTRACTS OF JAPAN vol. 1999, no. 05, 31. Mai 1999 (1999-05-31) -& JP 11 048950 A (TOYOTA MOTOR CORP), 23. Februar 1999 (1999-02-23)
- PATENT ABSTRACTS OF JAPAN vol. 1998, no. 06, 30. April 1998 (1998-04-30) -& JP 10 044952 A (AISIN SEIKI CO LTD;TOYOTA MOTOR CORP), 17. Februar 1998 (1998-02-17)

## Beschreibung

Die Erfindung betrifft ein elektrohydraulisches Bremssystem nach dem Oberbegriff des Patentanspruches 1.

Ein derartiges elektrohydraulisches Bremssystem geht aus der WO 00/43246 A1 hervor. Der Bremswunsch des Fahrers wird sensorisch erfasst und an ein Steuergerät übermittelt, das ein Hydraulikaggregat entsprechend ansteuert. Eine Kammer eines über ein Bremspedal betätigbaren Tandemhauptbremszylinders ist mit einer einlaufseitigen Kammer eines Pedalwegsimulators verbunden. Eine durch einen Kolben von der einlaufseitigen Kammer getrennte rücklaufseitige Kammer des Pedalwegsimulators ist über eine Rückförderleitung mit dem Hydraulikaggregat und über eine Hydraulikleitung und ein elektrisch betätigbares Rücklaufventil mit einem Bremsflüssigkeitsvorratsbehälter verbunden.

Ein elektrohydraulisches Bremssystem mit Pedalwegsimulator ist ferner in der WO 99/29548 ausführlich beschrieben. Bei konventionellen Bremsanlagen für Personenkraftwagen wird die Bremskraft des Fahrers mittels Hebelübersetzung des Bremspedals mechanisch auf einen Bremskraftverstärker und dann verstärkt weiter auf den Hauptbremszylinder übertragen. Mit dem erzeugten Druck wird die gewünschte Bremswirkung an den einzelnen Radbremsen erzielt. Bei einer elektrohydraulischen Bremse ist diese rein mechanisch-hydraulische Wirkungskette unterbrochen und durch Sensoren, ein Steuergerät und eine Druckversorgung ersetzt. Es besteht einer Normalbremsung keine mechanische oder hydraulische Verbindung zwischen dem Bremspedal und der Radbremse.

Eine elektrohydraulische Bremse besteht aus folgenden Komponenten:

Einer Betätigungseinheit aus Bremspedal, Hauptbremszylinder und Pedalwegsimulator, einem Hydroaggregat, Sensoren (z.B. Wegsensoren, Drucksensoren, Raddrehzahlsensoren), elektrischen Steuergeräten für das Hydroaggregat, einer Druckversorgung, Steuer- und Druckleitungen sowie Hydraulikventilen.

Die grundsätzliche Arbeitsweise einer elektrohydraulischen Bremse lässt sich wie folgt zusammenfassen:

Zwei unterschiedliche Sensoren- ein Sensor an der Betätigungseinheit für den Pedalweg und ein Drucksensor am Hydroaggregat - erfassen den Bremswunsch und übertragen ihn an das Steuergerät. In diesem Steuergerät sind auch die Funktionen Bremskraftverstärkung, Antiblockiersystem (ABS), Antriebsschlupfregelung (ASR) und Elektronisches Stabilitätsprogramm (ESP) mittels Software integriert. Die weiteren Sensoren von ABS,ASR und ESP liefern dem Steuergerät Daten über den Fahrzustand wie Geschwindigkeit oder Kurvenfahrt und über den Bewegungszustand der einzelnen Räder. Aus diesen Daten ermittelt die Software des Steuergerätes Signale für das Hydroaggregat, das diese in Bremsdrücke für die einzelnen Räder umsetzt. Eine elektrisch angetriebene Hydraulikpumpe mit einem Hochdruckspeicher und Drucküberwachung bildet die Druckversorgung.

Im ungestörten Zustand des elektrohydraulischen Bremssystems, d.h. im Normalbetrieb, wirkt das Bremspedal auf den Hauptbremszylinder und den nachgeordneten Pedalwegsimulator. Die Normalbremsung erfolgt mit der Ansteuerung des Hydroaggregates. Tritt während der Bremsung ein Fehler im Bremssystem auf, wird aus Sicherheitsgründen in einen Zustand geschaltet, bei dem eine hydraulische Verbindung zwischen der Betätigungseinheit und den Radbremsen hergestellt ist.

An diesem Punkt setzt die Erfindung an.

Bei bekannten elektrohydraulischen Bremssystemen wird im Fehlerfall die Druckversorgung des elektrohydraulischen Bremssystem mit Trennventilen vom den Radbremsen getrennt. Das Fahrzeug wird dann mit der Muskelkraft des Fahrers zum Stehen gebracht. Ein eventuell noch vorhandener Druckvorrat in der Druckversorgung des elektrohydraulischen Bremssystems bleibt für die Hilfsbremsung ungenutzt.

Ein weiterer verbesserungsfähiger Zustand tritt ein, wenn bei bekannten elektrohydraulischen Bremssystemen die elektrohydraulische Komponente während eines bereits eingeleiteten Bremsvorganges ausfällt und auf den Hilfsbremskreis umgeschaltet werden muss. In diesem Fall wurde nämlich das Bremspedal bereits noch im Normalbetrieb durchgedrückt und die Bremsflüssigkeit aus dem Hauptbremszylinder bereits zum großen Teil in den Pedalwegsimulator befördert. Die Bremsflüssigkeit im Pedalwegsimulator steht aber bei bekannten elektrohydraulischen Bremssystemen für die Hilfsbremsung nicht mehr zur Verfügung. Selbst wenn die noch im Hauptbremszylinder befindliche Bremsflüssigkeit ausreicht, um eine Hilfsbremsung ausführen zu können, was durch konstruktive Maßnahmen stets sicher gestellt ist, so verringert sich doch der Pedalweg bei einer Hilfsbremsung beträchtlich. Dies führt zu einer Verschlechterung der ergonomischen Kräfteverhältnisse.

Ausgehend vom nächstkommenden Stand der Technik stellt sich die erfindungsgemäße Aufgabe bei bekannten elektrohydraulischen Bremssystemen die mechanisch-hydraulischen Hilfsbremseigenschaften zu verbessern.

Erfindungsgemäß wird diese Aufgabe gelöst durch die Merkmale des Patentanspruches 1. Vorteilhafte Ausführungsformen sind in den Unteransprüchen enthalten.

Die Lösung gelingt durch eine Rückförderung der Bremsflüssigkeit aus dem Pedalwegsimulator in den Hilfsbremskreis. Hierzu wird im Notfall die rücklaufseitige Kammer des Pedalwegsimulators, die im Normalbetrieb mit dem Bremsflüssigkeitsvorratsbehälter verbunden ist, von dem drucklosen Bremsflüssigkeitsvorratsbehälter getrennt und stattdessen über das Druckbeaufschlagungsventil mit der Druckseite des elektrohydraulischen Druckversorgungssystems oder zumindest mit dem Druckspeicher des elektrohydraulischen Systems verbunden.

Mit der Erfindung werden hauptsächlich die folgenden Vorteile erzielt:

Im Notfall, wenn die elektrohydraulische Komponente des Bremssystems ausfällt, wird der Restdruck des Druckspeichers genutzt, die Bremsflüssigkeit, die vom Hauptbremszylinder in den Pedalwegsimulator gefördert wurde, für eine Hilfsbremsung zusätzlich zur Verfügung zu stellen. Bei der Erfindung erfolgt die Volumenrückförderung der Bremsflüssigkeit vom Pedalwegsimulator zurück in den Hauptbremszylinder und den daran angeschlossenen Hilfsbremskreis. Das Rückfördervolumen steht damit für die Hilfsbremsung zur Verfügung und verringert den Pedalweg. Ein Lösen des Bremspedals und damit eine Unterbrechung des Bremsmanövers, um ein Nachfließen von Bremsflüssigkeit aus dem Vorratsbehälter in den Hauptbremszylinder zu ermöglichen, ist mit der erfindungsgemäßen Volumenrückförderung nicht notwendig. Das Bremsmanöver kann ohne Unterbrechung zu Ende durchgeführt werden.

Wenn bei Ausfall der elektrohydraulischen Komponente des Bremssystems das Bremspedal bereits betätigt ist und damit der Bremsflüssigkeitsvorratsbehälter vom Hauptbremszylinder getrennt ist, unterstützt der Restdruck des Druckspeichers die Hilfsbremsung.

Die Ankopplung der rücklaufseitigen Kammer des Pedalwegsimulators an die Druckseite der Druckversorgung hat aber auch im Normalbetrieb des elektrohydraulischen Bremssystems Vorteile. Hierzu wird die rücklaufseitigen Kammer des Pedalwegsimulators über eine Parallelschaltung sowohl an die Druckseite als auch an die Saugseite der Druckversorgung gekoppelt. In jedem Zweig der parallelen Ankopplung befindet sich ein 2/2 Hydraulikventil mit zwei möglichen Stellungen und mit zwei Hydraulikanschlüssen. Durch Takten des zweiten 2/2 Hydraulikventil im Saugzweig der Ankoppelschaltung, lässt sich der Widerstand des Pedalwegsimulators gegen die Betätigung des Bremspedals mittels einer Druckkennlinie, die in der Software des elektronischen Steuergerätes des Bremssystems enthalten ist, gezielt einstellen. Mit Vorteil lassen sich verschiedene lineare oder nichtlineare Pedalweg-Pedalkraft-Kennlinien auf recht elegante Weise einstellen und damit die gewünschten nichtlinearen Pedalweg-Bremsdruck Zusammenhänge simulieren.

Im Hilfsbremskreis sind keinerlei elektrischer Hilfsaggregate angeordnet. Damit bleibt der Hilfsbremskreis auch bei Ausfall des elektrischen Bordnetzes im Kraftfahrzeug voll betriebsfähig.

Das Bremspedal wirkt sowohl bei der Normalbremsung als auch bei der Hilfsbremsung des elektrohydraulischen Bremssystems auf den Hauptbremszylinder. Der Pedalweg ist daher grundsätzlich für den Normalbetrieb als auch für den Hilfsbetrieb nahezu gleich und der Fahrer muss sich nicht auf plötzlich veränderte Pedalwege einstellen. Bei der Hilfsbremsung wird durch die Erfindung der Pedalweg verkleinert.

Ausführungsbeispiele der Erfindung werden im Folgenden anhand von Zeichnungen dargestellt und näher erläutert. Es zeigen:
- Fig.1: ein Blockschaltbild eines elektrohydraulischen Bremssystems mit druckbeaufschlagter Rückstellung des Pedalwegsimulators und Rückförderung der Bremsflüssigkeit in den Hilfsbremskreis,
- Fig. 2: einen Tandemhauptbremszylinder mit integriertem mechanisch betätigbarem Ventil, geeignet für das erfindungsgemäße elektrohydraulische Bremssystem.

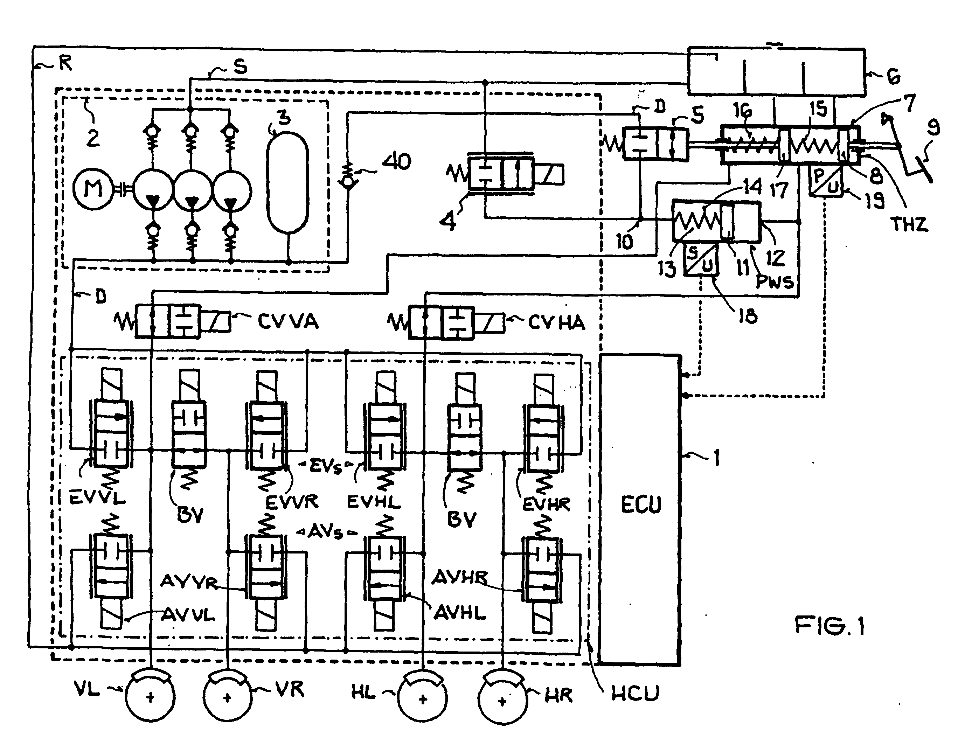

Ein elektrohydraulisches Bremssystem nach Fig. 1 besteht typischerweise aus den für sich genommen bekannten Komponenten einer Druckversorgung 2, eines Steuergerätes ECU (für Electronic Control Unit), eines Hydroaggregates HCU (für Hydraulic Control Unit) und einer Betätigungseinheit, bestehend aus Bremspedal 9, Tandemhauptbremszylinder THZ und Pedalwegsimulator PWS.

Das Hydraulikaggregat HCU ist bei der Normalbremsung durch Trennventile CVVA (für Cut Valve Vorderachse) und CVHA (für Cut Valve Hinterachse) vom Tandemhauptbremszylinder getrennt. Typischer Weise enthält das Hydraulikaggregat mehrere 2/2 Hydraulikmagnetventile mit jeweils zwei Stellmöglichkeiten und zwei Hydraulikanschlüssen. Aus Sicherheitsgründen und entsprechend gesetzlicher Zulassungsbestimmungen müssen in einem Kraftfahrzeug mindestens zwei getrennte Bremskreise für die Betriebsbremse vorhanden sein. Im gezeigten vereinfachten Ausführungsbeispiel sind das die beiden Bremskreise für die Vorderachse und für die Hinterachse des Fahrzeugs. Der Bremskreis für die Vorderachse wird gebildet aus einem Einlassventil vorne links EVvl und einem Auslassventil vorne links AVvl und der Radbremse vorne links VL sowie einem Einlassventil vorne rechts EVvr, einem Auslassventil vorne rechts AVvr und der Radbremse vorne rechts VR. Ein Ausgleichventil BV (Balance Valve) zwischen den beiden Einlassventilen kann für einen Druckausgleich zwischen linker und rechter Radbremse sorgen. Dieselbe Anordnung an Magnetventilen findet sich im Hydraulikaggregat nochmals für die Hinterachse. Der Bremskreis für die Hinterachse besteht aus einem Einlassventil hinten links EVhl, einem Auslassventil hinten links AVhl und der Radbremse hinten links HL sowie einem Einlassventil Evhr hinten rechts, einem Auslassventil Avhr hinten rechts und der Radbremse hinten rechts HR. Zwischen linkem und rechtem Einlassventil ist auch wieder ein Ausgleichsventil BV für den Druckausgleich zwischen linker und rechter Fahrzeugseite geschaltet. Sämtliche Ventile sind als elektrisch betätigbare, ansteuerbare Magnetventile mit selbsttätiger Rückstellung ausgebildet und werden von dem Steuergerät ECU der Elektrohydraulischen Bremse angesteuert. Die Einlassventile und Auslassventile des Hydraulikaggregates sind als Proportionalventile ausgebildet, da sich mit Proportionalventilen der Bremsdruck in den Radbremsen besser einsteuern lässt. Die Ausgleichsventile, die sich jeweils zwischen linker Radbremse und rechter Radbremse befinden, erlauben je nach Bedarfslage der Fahrsituation entweder einen Druckausgleich zwischen linken und rechten Radbremsen oder bei ABS, ASR, ESP Anwendungen durch Trennung von linker und rechter Radbremse eine Einzelbremsung der Fahrzeugräder.

Die Druckversorgung 2 des Hydraulikaggregates besteht aus einer angetriebenen Hydraulikpumpe, z.B. einer Dreikolbenpumpe, die mit einer Saugleitung S mit dem Bremsflüssigkeitsvorratsbehälter 6 verbunden ist und deren Druckleitung D mit einem Druckspeicher 3 und dem Hydraulikaggregat verbunden ist. Von der Druckversorgung werden die Einlassventile des Hydraulikaggregates mit unter Druck stehender Bremsflüssigkeit versorgt. Die Auslassventile des Hydraulikaggregates bauen bei deren Öffnen den Bremsdruck wieder ab. Die Auslassventile sind deshalb über eine Rückleitung R mit dem Bremsflüssigkeitsvorratsbehälter 6 verbunden, in den die aus den Auslassventilen abfließende Bremsflüssigkeit zurückgefördert wird.

Bei der Normalbremsung des elektrohydraulischen Bremssystems sind die beiden Bremskreise für Vorderachse und Hinterachse durch zwei Trennventile CWA, CVHA vom Tandemhauptbremszylinder getrennt. Bei Betätigung des Bremspedals wird die Bremsflüssigkeit aus einer der Druckkammern des Tandemhauptbremszylinders in einen Pedalwegsimulator gefördert, der in der Regel als hydraulisch betätigbarer Federspeicherdruckzylinder ausgebildet ist. Der Fahrer verrichtet durch die Verdrängung der Bremsflüssigkeit aus dem Hauptbremszylinder in den Hydraulikzylinder des Pedalwegsimulators gegen die Federkraft des Pedalwegsimulators Arbeit. Über den Kolbenweg des Pedalwegsimulators und den vom Fahrer ausgeübten Druck wird der Bremswunsch des Fahrers mittels nicht dargestellter Wege- und Drucksensoren am Pedalwegsimulator und am Hraulikaggregat ermittelt und im Steuergerät mittels Software durch Ansteuerung des Hydraulikaggregates in ein Bremsmanöver umgesetzt.

Im Fehlerfall oder bei Ausfall des Bordnetzes im Kraftfahrzeug geht das Bremssystem in einen Zustand mit einem rein mechanisch-hydraulischen Hilfsbremskreis. Hierzu trennen die Einlassventile des Hydroaggregates die Druckversorgung von den Bremsleitungen der Radbremsen. Die beiden Trennventile CVVA, CVHA verbinden die beiden Druckkammern des Tandemhauptbremszylinders mit den beiden Bremskreisen des Kraftfahrzeuges. Hierdurch bleibt das Fahrzeug mit Muskelkraft durch Betätigung des Bremspedals 9 weiterhin, wenn auch ohne Hilfskraftunterstützung, bremsfähig.

Die Wirkungsweise und die Beschaltung der bisher beschriebenen verschiedenen Ventile in den verschiedenen Betriebsmodi der Bremssteuerung ist hinlänglich aus bereits eingeführten mechanisch-hydraulischen Zweikreisbremssystemen, ABS, ASR und ESP Bremssystemen bekannt und braucht hier nicht im Detail erörtert zu werden. Sie sind der Vollständigkeit halber für die Anwendung der Erfindung und für das Verständnis der Erfindung nochmals in den Grundzügen kurz abgehandelt worden.

Die Erfindung liegt nun in der hydraulischen Ankopplung von Tandemhauptbremszylinder und Pedalwegsimulator an die Druckversorgung des elektrohydraulischen Bremssystems. Hierzu wir die Druckleitung D der Druckversorgung mit zwei in Reihe geschalteten 2/2-Hydraulikventilen mit der Saugleitung der Druckversorgung S oder mit der Rückleitung R zum Bremsflüssigkeitsvorratsbehälter verbunden. Das von der Druckseite her gesehen erste Ventil ist von seiner Funktion und Wirkung ein Druckbeaufschlagungventil 5 und das in Reihe folgende Ventil ist von seiner Funktion und Wirkung her ein Druckentlastungsventil 4. Druckbeaufschlagungsventil 5 und Druckentlastungsventil 4 sind jeweils selbstrückstellende Hydraulikventile. Das Druckentlastungsventil ist ein von dem Steuergerät ECU des Bremssystems ansteuerbares und betätigbares Magnetventil. Das Druckbeaufschlagungsventil 5 kann grundsätzlich auch als elektrisches Magnetventil ausgebildet sein, das vom Steuergerät des Bremssystems angesteuert wird. In dem in Fig. 1 gezeigten Ausführungsbeispiel ist das Druckbeaufschlagungsventil vorteilhafter Weise ein mechanisch zu betätigendes Hydraulikventil, das über eine mechanische Wirkverbindung vom Hauptbremszylinder betätigt wird. Eine unmittelbare mechanische Betätigung des Druckbeaufschlagungsventils 5 durch den Hauptbremszylinder und damit mittelbar durch das Bremspedal hat den Vorteil, dass das Ventil auch noch bei komplettem Ausfall der elektrischen Energieversorgung sicher betätigt werden kann. Das Druckbeaufschlagungsventil und das Druckentlastungsventil sind mit einer Hydraulikleitung verbunden, die ihrerseits über einen Dreiwegeabzweig 10 mit der hydraulischen Rückleitung des Pedalwegsimulators verbunden ist. Der Pedalwegsimulator ist als Hydraulikzylinder mit einem Kolben 11 ausgebildet, der den Zylinder in zwei Kammern teilt. In eine einlaufseitige Kammer 12 und in eine rücklaufseitige Kammer 13. Die einlaufseitige Kammer des Pedalwegsimulators steht in hydraulischer Verbindung mit der primären Druckkammer des Hauptbremszylinders und wird bei Betätigung des Bremspedals mit Druck beaufschlagt.

Das funktionale Zusammenwirken zwischen Hauptbremszylinder, Pedalwegsimulator, Druckversorgung und Druckbeaufschlagungsventil 5 sowie Druckentlastungsventil 4 ist wie folgt:

Bei der Normalbremsung des Bremssystems, also bei fehlerfreiem Zustand des elektrohydraulischen Bremssystems bleibt das Druckbeaufschlagungsventil dauerhaft in seiner Trennstellung. Die Druckleitung der Druckversorgung ist damit im Normalbetrieb von der rücklaufseitigen Kammer des Pedalwegsimulators getrennt.

In einer vorteilhaften Ausführung der Erfindung gemäß Fig. 1, ist der Pedalwegsimulator als hydraulischer Federspeicherzylinder ausgebildet. In dem Fall ist die rücklaufseitige Kammer des Pedalwegsimulators als Federkammer ausgebildet und enthält eine Druckfeder 14, die den Kolben im unbelasteten Zustand, d.h. bei nicht betätigtem Bremspedal einlaufseitig in seinen Ausgangszustand schiebt.

Bei der Normalbremsung sind auch die beiden Trennventile CVVA, CVHA in ihrer geschlossen Stellung, so dass der Tandemhauptbremszylinder von dem Hydraulikaggregat getrennt ist. Das hat zur Folge, dass die Hydraulikleitung der sekundärseitigen Druckkammer 16 des Tandemhauptbremszylinders abgeschlossen ist, so dass die eingeschlossene Bremsflüssigkeit eine Bewegung des Sekundärkolben 17 im Tandemhauptbremszylinders verhindert. Ebenso ist bei der Normalbremsung die Hydraulikleitung zwischen der primärseitigen Druckkammer 15 und dem Hydraulikaggregat unterbrochen. Allerdings ist dadurch das Pedal selbst nicht blockiert, da bei Betätigung des Bremspedals die Hydraulikflüssigkeit von dem vom Bremspedal betätigten Kolben in den Pedalwegsimulator gedrückt wird. Das Druckentlastungsventil 4 in der Rückleitung des Pedalwegsimulators ist im Normalzustand geöffnet, so dass der Kolben 11 des Pedalwegsimulators in diesem Zustand der Betätigung des Bremspedals in Abhängigkeit der Öffnung des Druckentlastungsventils nachgeben kann. Bei nicht betätigtem Bremspedal kann das Druckentlastungsventil (4) offen oder geschlossen sein. Allerdings müssen Vorkehrungen getroffen sein, dass bei Betätigung des Bremspedals das Druckentlastungsventil (4) zumindest teilweise öffnet, bevor die Trennventile schließen.

Hieraus ergibt sich einer der erfindungsgemäßen Vorteile für den Normalbetrieb des elektrohydraulischen Bremssystems. Da der Widerstand der Kolbenbewegung nicht nur von der Federkraft und damit der Rückstellkraft des Pedalwegsimulators abhängt, sondern auch von der Öffnung des Druckentlastungsventils lassen sich durch gezieltes Öffnen und Schließen des Druckentlastungsventils 4 lineare oder nichtlineare Pedalweg-Pedalkraft Zusammenhänge einstellen und simulieren. Hierzu wird beispielsweise mit einem Wegsensor 18 der Kolbenweg im Pedalwegsimulator gemessen und mit einem Drucksensor 19 an der pedalzugewandten Bremskammer 15 des Tandemhauptbremszylinders der gewünschte Bremsdruck gemessen. Wegesensor und Drucksensor geben ihre Messwerte nach Wandlung der Messwerte in ein Spannungssignal U an das Steuergerät ECU. In dem Steuergerät werden die Messwerte für den gewünschten Bremsdruck und den Kolbenweg im Pedalwegsimulator von einer Software in Steuerbefehle für die Ventile des Hydraulikaggregates und damit für den an den Radbremsen anliegenden tatsächlichen Bremsdruck und erfindungsgemäß auch in Steuerbefehle für die Öffnung und Schließung des Druckentlastungsventils 4 umgesetzt. Der Kolbenweg ist hierbei ein Maß für den Pedalweg und der Druck in der primären Druckkammer des Tandemhauptbremszylinders ein Maß für die einzustellende Pedalkraft. Aus Pedalweg und Pedalkraft ermittelt eine Software im Steuergerät (ECU) den Bremswunsch und den einzustellenden Bremsdruck an den Radbremsen. Die von dem Steuergerät angesteuerten Ventile der Bremsanlage sind hierbei Aktoren. In dem Steuergerät selbst sind die Sensor-Aktor-Zusammenhänge in Kennfeldern festgehalten, so dass zu jedem Sensordatensatz ein eindeutiger Aktordatensatz und damit eine eindeutige Ansteuerung des Bremssystems, respektive der Ventile des Bremssystems, abgelegt ist. Im Fall des erfindungsgemäß gewünschten linearen oder nichtlinearen Pedalweg-Pedalkraft Zusammenhangs besteht das Kennfeld zur Ansteuerung des Druckentlastungsventils aus einer linearen oder nichtlinearen Kennlinie, bei der der Bremsdruck überproportional, am besten progressiv oder exponentiell mit dem Pedalweg steigt. Dies wird erreicht, indem mit zunehmendem Pedalweg der Schließgrad des Druckentlastungsventils zunimmt. Solche Kennlinien lassen sich regelungstechnisch am besten mit Proportionalventilen nachfahren. Zweckmäßiger Weise ist daher das Druckentlastungsventil als Proportionalventil ausgebildet.

In einer einfacheren, weniger bevorzugten Ausführungsform kann das Druckentlastungsventil auch als Trennventil ausgebildet sein. In diesem Fall müsste die nichtlineare Pedalweg-Bremsdruck-Kennlinie mittels Takten, d.h. schnelles, zeitgesteuertes Öffnen und Schließen des Trennventils nachgefahren werden. Ähnlich einer Pulsweitensteuerung müssten dann mit zunehmendem Pedalweg die Zeitintervalle, in denen das Druckentlastungsventil geschlossen ist, überproportional, am besten progressiv oder exponentiell mit größer werdendem Pedalweg zunehmen. Die hätte allerdings unter Umständen ein leichtes Vibrieren des Bremspedals zur Folge, dass von einem Fahrer eines Kraftfahrzeuges als unangenehm empfunden werden könnte.

Der zweite, hauptsächliche Vorteil der Erfindung ergibt sich, wenn während einer Bremsung ein Fehler des elektrohydraulischen Bremssystems auftritt. Im Fehlerfall werden alle vier Einlassventile des Hydraulikaggregates für die vier Radbremsen von dem Steuergerät in ihren geschlossenen Zustand geschaltet. Falls das Steuergerät ausfällt, gehen die Einlassventile bei Spannungsausfall am Antrieb der Ventile konstruktionsbedingt, selbsttätig in den geschlossen Zustand. Durch die federkraftbedingte Rückstellung der Ventile wird der geschlossene Zustand bei Spannungsausfall selbsttätig eingenommen. Durch Schließen aller Einlassventile wird die Druckversorgung 2 von den Bremskreisen abgekoppelt. Gleichzeitig öffnen die Trennventile CVVA, CVHA mit denen im Normalzustand das Hydraulikaggregat vom Tandemhauptbremszylinder abgekoppelt ist. Die Trennventile gehen konstruktionsbedingt bei fehlender Ansteuerung oder bei Spannungsausfall am Stellglied der Trennventile in die offene Stellung. Durch die federkraftbedingte Rückstellung der Trennventile wird die offene Stellung bei Spannungsausfall selbsttätig eingenommen. Ebenfalls zeitgleich oder früher mit der Rückstellung der Trennventile und der Einlassventile wird das Druckentlastungsventil 4 in der Rückleitung des Pedalwegsimulators geschlossen. Auch dieses Ventil ist so konstruiert, dass durch Federkraftrückstellung die geschlossene Position bei Ausfall der Ansteuerung oder bei Ausfall der Spannungsversorgung selbsttätig eingenommen wird. Durch diese Änderungen der Ventilstellungen befindet sich das elektrohydraulische Bremssystem nun in der Rückfallebene. Die Ventilstellungen haben den Hilfsbremskreis aktiviert.

Beim Hilfsbremskreis ist nun im Beispiel der Fig. 1 die primäre Druckkammer 15 des Tandemhauptzylinders mit einer Hydraulikleitung über das geöffnete Trennventil CVHA für den Hinterachsbremskreis mit den Radbremsen des Hinterachsbremskreises verbunden. Die sekundäre, zweite Druckkammer 16 des Tandemhauptbremszylinders ist nun mit einer Hydraulikleitung über das geöffnete Trennventil CVVA für den Vorderachsbremskreis mit den Radbremsen des Vorderachsbremskreises verbunden. Hierdurch wird die Bewegung des Sekundärkolbens 17 im Tandemhauptbremszylinder möglich. Im Hilfsbremsmodus ist durch Schließen des Druckentlastungsventils 4 in der Rückleitung des Pedalwegsimulators nun der Kolben des Pedalwegsimulators arretiert. Bei Betätigung des Bremspedals kann deshalb keine Bremsflüssigkeit mehr in den Pedalwegsimulator fließen. Der vom Fahrer mittels Pedaldruck aufgebrachte Bremsdruck wird von der ersten, primären Druckkammer des Tandemhauptbremszylinders mittels Hydraulikleitungen auf die Radbremsen der Hinterachse übertragen. Gleichzeitig wird bei Betätigung des Bremspedals der Sekundärkolben 17, des Tandemhauptbremszylinders betätigt und der Bremsdruck in der sekundären Druckkammer mittels Hydraulikleitungen auf die Radbremsen der Vorderachse übertragen.

Im Unterschied zu bekannten Hilfsbremskreisen von elektrohydraulischen Bremssystemen wird bei der erfindungsgemäßen Anordnung zusätzlich die rücklaufseitige Kammer 13 des Pedalwegsimulators PWS mit der Druckversorgung 2 oder zumindest mit dem Druckspeicher 3 der Druckversorgung mittels einer Druckleitung D hydraulisch verbunden. Bei Betätigung des Bremspedals wird über die Verschiebung des Sekundärkolbens 17 im Tandemhauptbremszylinder, das mit dem Sekundärkolben in mechanischer Wirkverbindung, z.B. über eine Kolbenstange, stehende Druckbeaufschlagungsventil 5 von seinem geschlossenen Zustand in den geöffneten Zustand umgeschaltet. Hierdurch wird der Druck der Druckversorgung 2 über eine Druckleitung D auf die rücklaufseitige Kammer 13 des Pedalwegsimulators aufgeprägt. Zumindest wird der Druckspeicher 3 über eine Druckleitung mit der rücklaufseitigen Kammer 13 des Pedalwegsimulators verbunden. Da das Druckentlastungsventil 4 bei der Hilfsbremsung geschlossen ist, wird bei Betätigung des Bremspedals durch Öffnen des Druckbeaufschlagungsventils 5 der noch im Druckspeicher befindliche Druck an die rücklaufseitige Kammer des Pedalwegsimulators angelegt. Sollte sich der Kolben 11 des Pedalwegsimulators PWS nicht in seiner einlaufseitigen Endposition befinden, wird er durch diese rücklaufseitige Druckbeaufschlagung in seine einlaufseitige Endposition gefahren, auch gegen einen eventuellen Bremsdruck durch Fußkraftbetätigung des Bremspedals. Der Druck in der Druckversorgung bzw. in dem Druckspeicher ist in der Regel größer als der Bremsdruck der von einem Fahrer mittels Muskelkraft durch Betätigung des Bremspedals aufgebracht wird.

Dies bewirkt zweierlei Vorteile eines elektrohydraulischen Bremssystems, das mit einer erfindungsgemäßen Ventilanordnung in der Rückleitung des Pedalwegsimulators ausgebildet ist:

Bremsflüssigkeit, die vom Tandemhauptbremszylinder in den Pedalwegsimulator gefördert worden war, wird durch diese rücklaufseitige Druckbeaufschlagung des Pedalwegsimulators wieder zurück in den Hilfsbremskreis befördert. Es ergibt sich eine Volumenrückförderung der im Pedalwegsimulator befindlichen Bremsflüssigkeit entweder in den Tandemhauptbremszylinder oder in die Bremszylinder der Radbremsen des angeschlossenen Hilfsbremskreises. In dem Ausführungsbeispiel der Fig. 1 ist der Hilfsbremskreis für die Hinterräder an den Pedalwegsimulator angeschlossen. Natürlich könnte auch der Hilfsbremskreis für die Vorderräder oder eine andere nach den Zulassungsbestimmungen für Kraftfahrzeuge zulässige Kombination aus Vorderrädern und Hinterrädern als Hilfsbremskreis an den Pedalwegsimulator angeschlossen sein.

Sollte das elektrohydraulische Bremssystem mit betätigtem und gedrücktem Bremspedal ausfallen, wird das Bremsflüssigkeitsvolumen das aus dem Tandemhauptbremszylinder in den Pedalwegsimulator gefördert wurde, wo es für eine Hilfsbremsung verloren wäre, durch die erfinderische Maßnahme der Volumenrückförderung wieder in den Hilfsbremskreis zurückgefördert und zwar bei betätigtem Bremspedal, ohne dass der Bremsvorgang unterbrochen wird. Bei bekannten elektrohydraulischen Bremssystemen muss in diesem Fall das Bremspedal gelöst werden, damit die Bremsflüssigkeit vom Pedalwegsimulator in den Hilfsbremskreis zurückfließen kann. Im Anschluss daran wird bei bekannten Systemen der Kolben des Pedalwegsimulators blockiert. In einer Gefahrensituation wird daher bei Hilfsbremsungen mit bekannten elektrohydraulischen Bremssystemen unter Umständen wertvoller Bremsweg ungenutzt verschenkt. Die Erfindung verkürzt bei der Hilfsbremsung den Bremsweg beträchtlich und erhöht damit die Sicherheit für alle Verkehrsbeteiligten.

Sollte das elektrohydraulische Bremssystem bei nicht betätigtem Bremspedal ausfallen, so wird mit der erfindungsgemäßen Maßnahme der rücklaufseitigen Druckbeaufschlagung des Pedalwegsimulators zusammen mit dem Schließen des Druckentlastungsventils 4 der Kolben 11 des Pedalwegsimulators in der einlaufseitigen Endposition arretiert, so dass bei Einleiten einer Hilfsbremsung keine Bremsflüssigkeit vom Tandemhauptbremszylinder in den Pedalwegsimulator gefördert werden kann. Ein eventuelles Lecken des Druckentlastungsventils 4 kann durch die zusätzliche Druckbeaufschlagung kompensiert werden.

Vorzugsweise ist bei einer weiteren Ausführungsform der Erfindung in der hydraulischen Verbindung zwischen der Druckversorgung (2) und dem Dreiwegeabzweig (10) zum Pedalwegsimulator ein Rückschlagventil (40) eingebaut, das einen Volumenstrom vom Pedalwegsimulator in die Druckversorgung verhindert. Dies verhindert bei ungenügendem Restdruck in der Druckversorgung oder im Druckspeicher eine Volumenförderung von Bremsflüssigkeit aus dem Tandemhauptbremszylinder in die Druckkammer des Pedalwegsimulators. Alternativ können das Rückschlagventil (40) und das Druckbeaufschlagungsventil 5 in einem Bauteil integriert sein.

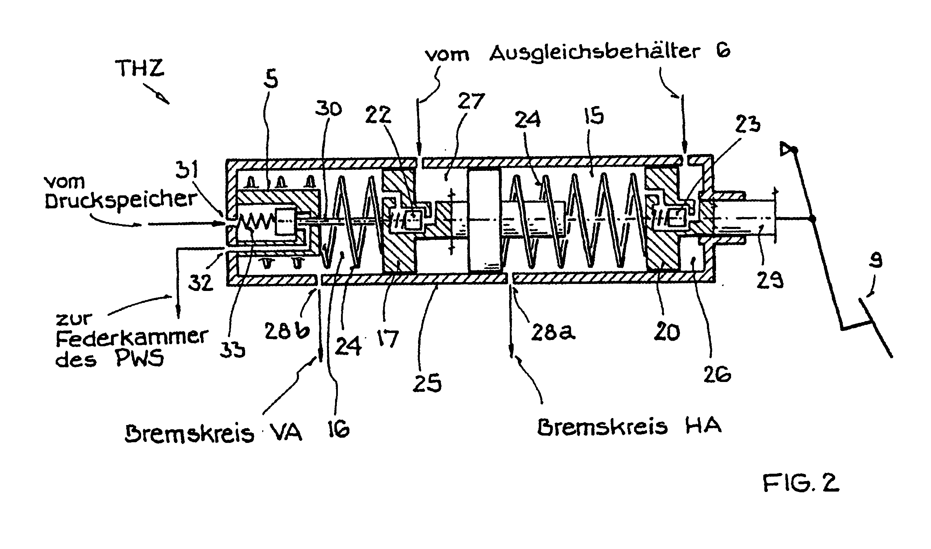

Fig. 2 zeigt eine schematische Schnittdarstellung durch einen Tandemhauptbremszylinder mit integriertem, mechanisch betätigbaren Zusatzventil, das als Druckbeaufschlagungsventil 5 für ein erfindungsgemäßes elektrohydraulisches Bremssystem geschaltet werden kann. Der Tandemhauptbremszylinder THZ enthält in einem Gehäuse 25 in an sich bekannter Weise einen Primärkolben 20 mit Zentralventil 23 sowie einen Sekundärkolben 17 mit Zentralventil 22. Die beiden Kolben sind in der angegeben Reihenfolge beginnend mit dem Primärkolben von der Bremspedalseite her in dem zylinderförmigen, druckfesten Gehäuse nacheinander angeordnet. Die Kolben teilen das Gehäuse, respektive den Bremszylinder in insgesamt vier Teilräume, nämlich einen primären Druckausgleichsraum 26, eine primäre Druckkammer 15, einen sekundären Druckausgleichsraum 27 und eine sekundäre Druckkammer 16. Die beiden Druckausgleichsräume stehen jeweils über Ausgleichsbohrungen mit dem Ausgleichsbehälter 6 des Bremssystems in Verbindung. Der Zwischenraum zwischen dem Primärkolben und dem Sekundärkolben bildet die primäre Druckkammer 15, die über einen Hydraulikanschluss 28a mit dem ersten Bremskreis der Bremsanlage verbunden ist. Der Druckraum, der von dem Sekundärkolben 17 und dem Gehäuse am pedalabgewandten Ende des Bremszylinders gebildet wird, bildet die sekundäre Druckkammer 16, die über einen weiteren Hydraulikanschluss 28b mit dem zweiten Bremskreis der Bremsanlage verbunden ist. Die Pedalkraft vom Bremspedal wird mit einer Kolbenstange 29 auf den Primärkolben übertragen. Im unbelasteten Zustand des Bremszylinders sind die beiden Zentralventile 22,23 im Primärkolben und im Sekundärkolben geöffnet und erlauben einen Druckausgleich der beiden Druckkammern mit dem Ausgleichsbehälter der Bremsanlage. Im belasteten Zustand, d.h. bei einer Betätigung des Bremspedals schließen die beiden Zentralventile und trennen die beiden Druckkammern jeweils vom den Druckausgleichsräumen und damit vom Ausgleichsbehälter der Bremsanlage. Beim Lösen des Bremspedals werden Sekundärkolben und Primärkolben wieder mit Rückstellfedern 24 in ihre unbelastete Ausgangslage zurück gebracht. Soweit sind Tandemhauptbremszylinder aus dem Stand der Technik bekannt.

Erfindungsgemäß wird nun ein solcher Tandemhauptbremszylinder zur Anwendung im beschrieben elektrohydraulischen Bremssystem mit einem zusätzlichen, mechanisch betätigbaren Ventil, mit dem eine äußere Hydraulikleitung geschaltet werden kann, weitergebildet. Hierzu ist an oder in der sekundären Druckkammer ein zusätzliches Hydraulikventil 5 angeordnet, das mit dem Sekundärkolben 17 in mechanischer Wirkverbindung steht. In dem gezeigten Ausführungsbeispiel der Figur 2 ist das Hydraulikventil 5 innerhalb der sekundären Druckkammer 16 des Tandemhauptbremszylinders angeordnet und wird mittels einer Kolbenstange 30, die mit dem Sekundärkolben 17 verbunden ist, bei Betätigung des Sekundärkolbens geöffnet, so dass dann die beiden Hydraulikanschlüsse 31 und 32 des zusätzlichen Hydraulikventils miteinander in Verbindung stehen. Wird der Sekundärkolben wieder entlastet, schließt das zusätzliche Hydraulikventil wieder. Der Schließvorgang des Hydraulikventils kann hierbei durch eine im Ventil selbst enthaltene Rückstellfeder 33 unterstützt sein.

Im Zusammenhang mit einem erfindungsgemäßen elektrohydraulischen Bremssystem ist der Tandemhauptbremszylinder mit zusätzlichem Hydraulikventil besonders gut geeignet. Das zusätzliche Hydraulikventil des Tandemhauptbremszylinders wird nämlich in dem erfindungsgemäßen Bremssystem als Druckbeaufschlagungsventil 5 eingesetzt. Hierzu wird der eine, äußere Hydraulikanschluss 31 des zusätzlichen Hydraulikventils mit der Druckversorgung 2 oder zumindest mit dem Druckspeicher 3 eines elektrohydraulischen Bremssystems verbunden und der zweite Anschluss 32 des zusätzlichen Hydraulikventils wird mit der rücklaufseitigen Federkammer 13 des Pedalwegsimulators eines elektrohydraulischen Bremssystems verbunden. Dadurch werden erfindungsgemäß das Druckbeaufschlagungsventil 5 und der Tandemhauptbremszylinder THZ aus dem Ausführungsbeispiel der Fig. 1 in einem Bauteil vereint und einstückig ausgebildet.

## Patentansprüche

1. Elektrohydraulisches Bremssystem mit einem Hydraulikaggregat (HCU) für mindestens zwei Bremskreise, mindestens zwei Trennventilen (CVVA,CVHA), einem elektronischen Steuergerät (ECU), einer Druckversorgung (2) oder zumindest einem Druckspeicher (3), mehreren Sensoren (18,19) zur Ermittlung eines Bremswunsches und mit einer Betätigungseinheit aus einem Bremspedal (9), einem einen Primärkolben (20) in einer primären Druckkammer (15) und einen Sekundärkolben (17) in einer sekundären Druckkammer (16) aufweisenden Tandemhauptbremszylinder (THZ) und einem Pedalwegsimulator (PWS), dessen einlaufseitige Kammer (12) mit der primären Druckkammer (15) des Tandemhauptbremszylinders (THZ) verbunden ist,
**dadurch gekennzeichnet,**
**dass** eine rücklaufseitige Kammer (13) des Pedalwegsimulators (PWS) über einen Dreiwegeabzweig (10) mit einer Hydraulikleitung über ein Druckbeaufschlagungsventil (5) mit der Druckversorgung (2) oder mit dem Druckspeicher (3) verbunden ist und mit einer Hydraulikleitung über ein Druckentlastungsventil (4) mit der Saugseite (S) der Druckversorgung oder mit einem Bremsflüssigkeitsvorratsbehälter (6) oder mit einer zum Bremsflüssigkeitsvorratsbehälter (6) führenden Rückleitung (R) des Hydraulikaggregates verbunden ist, wobei das Druckbeaufschlagungsventil (5) in den Tandemhauptbremszylinders (THZ) integriert ist und mit dem Sekundärkolben (17) in mechanischer Wirkverbindung steht, derart, dass das Druckbeaufschlagungsventil (5) bei betätigtem Sekundärkolben (17) geöffnet ist und die rücklaufseitige Kammer (13) des Pedalwegsimulators (PWS) mit der Druckversorgung (2) oder dem Druckspeicher (3) verbindet.

2. Elektrohydraulisches Bremssystem nach Anspruch 1, **dadurch gekennzeichnet, dass** das Druckentlastungsventil (4) mit dem Steuergerät (ECU) verbunden ist.

3. Elektrohydraulisches Bremssystem nach Anspruch 1, **dadurch gekennzeichnet, dass** die Sensoren Wegesensoren oder Drucksensoren sind.

4. Elektrohydraulisches Bremssystem nach Anspruch 3, **dadurch gekennzeichnet, dass**
- am Pedalwegsimulator (PWS) oder am Bremspedal (9) oder am Tandemhauptbremszylinder (THZ) ein Wegsensor (18) und am Tandemhauptbremszylinder (THZ) oder am Pedalwegsimulator (PWS) oder am Hydroaggregat (HCU) ein Drucksensor (19) angeordnet sind,
- der Wegesensor (18) und der Drucksensor (19) mit dem Steuergerät (ECU) in Verbindung sind
- und aus den Signalen des Wegsensors (18) und des Drucksensors (19) in dem Steuergerät mittels Software der Bremswunsch ermittelt wird.

5. Elektrohydraulisches Bremssystem nach Anspruch 4, **dadurch gekennzeichnet, dass** die Ansteuerung des Druckentlastungsventils (4) in Abhängigkeit der Signale des Wegsensors (18) oder des Drucksensors (19) erfolgt.

6. Elektrohydraulisches Bremssystem nach Anspruch 5, **dadurch gekennzeichnet, dass** der Schließgrad des Druckentlastungsventils (4) mit zunehmendem Pedalweg des Bremspedals (9) überproportional oder exponentiell zunimmt.

7. Elektrohydraulisches Bremssystem nach Anspruch 1, **dadurch gekennzeichnet, dass** im Fehlerfall einer der Komponenten des Bremssystems oder bei Ausfall des Steuergerätes (ECU) das Druckentlastungsventil (4) geschlossen ist.

8. Elektrohydraulisches Bremssystem nach Anspruch 1 oder 7, **dadurch gekennzeichnet, dass** im Fehlerfall einer der Komponenten des Bremssystems oder bei Ausfall des Steuergerätes (ECU) bei Betätigung des Bremspedals (9) das Druckbeaufschlagungsventil (5) geöffnet ist.

## Claims

1. Electro-hydraulic brake system with a hydraulic aggregate (HCU) for at least two brake circuits, at least two cut-off valves (CVVA, CVHA), an electronic control unit (ECU), a pressure supply (2) or at least a pressure reservoir (3), several sensors (18, 19) for determining a wish to brake, and with an actuation unit comprising a brake pedal (9), a tandem main brake cylinder (THZ) comprising a primary piston (20) in a primary pressure chamber (15) and a secondary piston (17) in a secondary pressure chamber (16), and a pedal path simulator (PWS) whose chamber (12) on the inlet side is connected to the primary pressure chamber (15) of the tandem main brake cylinder (THZ),
**characterised in that**
a chamber (13) on the return side of the pedal path simulator (PWS) is connected via three-way branch connector (10) to a hydraulic line and via a pressurising valve (5) to the pressure supply (2) or to the pressure reservoir (3) and to a hydraulic line, and via a pressure relief valve (4) to the suction side (S) of the pressure supply or to a brake fluid reservoir (6), or to a return line (R) of the hydraulic aggregate leading to the brake fluid reservoir (6), such that the pressurising valve (5) is integrated in the tandem main brake cylinder (THZ) and is in mechanically active connection with the secondary piston (17), in such manner that when the secondary piston (17) is actuated the pressurising valve (5) is opened and connects the chamber (13) of the pedal path simulator (PWS) on the return side to the pressure supply (2) or to the pressure reservoir (3).

2. Electro-hydraulic brake system according to Claim 1,
**characterised in that**
the pressure relief valve (4) is connected to the control unit (ECU).

3. Electro-hydraulic brake system according to Claim 1,
**characterised in that**
the sensors are path sensors or pressure sensors.

4. Electro-hydraulic brake system according to Claim 3,
**characterised in that**
- a path sensor (18) is arranged on the pedal path simulator (PWS) or on the brake pedal (9) or on the tandem main brake cylinder (THZ) and a pressure sensor (19) is arranged on the tandem main brake cylinder (THZ) or on the pedal path simulator (PWS) or in the hydraulic aggregate (HCU),
- the path sensor (18) and the pressure sensor (19) are connected to the control unit (ECU),
- and the wish to brake is determined by software in the control unit from the signals of the path sensor (18) and the pressure sensor (19).

5. Electro-hydraulic brake system according to Claim 4,
**characterised in that**
the pressure relief valve (4) is controlled as a function of the signals from the path sensor (18) or the pressure sensor (19).

6. Electro-hydraulic brake system according to Claim 5,
**characterised in that**
the closure level of the pressure relief valve (4) increases over-proportionally or exponentially with increasing pedal path of the brake pedal (9).

7. Electro-hydraulic brake system according to Claim 1,
**characterised in that**
if one of the components of the brake system is defective or if the control unit (ECU) fails, the pressure relief valve (4) is closed.

8. Electro-hydraulic brake system according to Claims 1 or 7,
**characterised in that**
if one of the components of the brake system is defective or if the control unit (ECU) fails, the pressurising valve (5) is opened when the brake pedal (9) is actuated.

## Revendications

1. Système de freinage électrohydraulique comprenant un ensemble hydraulique (HCU) pour au moins deux circuits de freinage, au moins deux valves d'isolement (CVVA, CVHA), un calculateur électronique (ECU), une alimentation en pression (2) ou au moins un accumulateur de pression (3), plusieurs capteurs (18, 19) servant à déterminer une intention de freinage, et comprenant un ensemble d'actionnement se composant d'une pédale de frein (9), d'un maître-cylindre de frein tandem (THZ) présentant un piston primaire (20) dans une chambre de pression primaire (15) et un piston secondaire (17) dans une chambre de pression secondaire (16), et d'un simulateur de course de pédale (PWS) dont la chambre (12), côté entrée, est raccordée à la chambre de pression primaire (15) du maître-cylindre de frein tandem (THZ),
**caractérisé**
**en ce qu'**une chambre (13), côté retour, du simulateur de course de pédale (PWS) est raccordée à une conduite hydraulique via une dérivation trois voies (10), à une alimentation en pression (2) via une valve d'alimentation en pression (5) ou bien à l'accumulateur de pression (3), et est raccordée à une conduite hydraulique via une valve de décompression (4) par le côté aspiration (S) de l'alimentation en pression, ou bien à un réservoir de liquide de frein (6) ou bien à une conduite de retour (R) de l'ensemble hydraulique conduisant au réservoir de liquide de frein (6), où la valve d'alimentation en pression (5) est intégrée dans le maître-cylindre de frein tandem (THZ) et est en liaison mécanique active avec le piston secondaire (17), de manière telle que la valve d'alimentation en pression (5) soit ouverte lorsque le piston secondaire (17) est actionné, et raccorde la chambre (13), côté sortie, du simulateur de course de pédale (PWS), à l'alimentation en pression (2) ou à l'accumulateur de pression (3).

2. Système de freinage électrohydraulique selon la revendication 1, **caractérisé en ce que** la valve de décompression (4) est raccordée au calculateur électronique (ECU).

3. Système de freinage électrohydraulique selon la revendication 1, **caractérisé en ce que** les capteurs sont des capteurs de déplacement ou des capteurs de pression.

4. Système de freinage électrohydraulique selon la revendication 3, **caractérisé**
- **en ce qu'**un capteur de déplacement (18) est disposé au niveau du simulateur de course de pédale (PWS) ou au niveau de la pédale de frein (9) ou au niveau du maître-cylindre de frein tandem (THZ), et un capteur de pression (19) est disposé au niveau du maître-cylindre de frein tandem (THZ) ou au niveau du simulateur de course de pédale (PWS) ou au niveau de l'ensemble hydraulique (HCU),
- **en ce que** le capteur de déplacement (18) et le capteur de pression (19) sont connectés au calculateur électronique (ECU), et
- **en ce que** l'intention de freinage est déterminée dans le calculateur électronique, par le logiciel, d'après les signaux provenant du capteur de déplacement (18) et du capteur de pression (19).

5. Système de freinage électrohydraulique selon la revendication 4, **caractérisé en ce que** le pilotage de la valve de décompression (4) est réalisé en fonction des signaux provenant du capteur de déplacement (18) ou du capteur de pression (19).

6. Système de freinage électrohydraulique selon la revendication 5, **caractérisé en ce que** le degré de fermeture de la valve de décompression (4) augmente de façon surproportionnelle ou exponentielle, avec une course croissante de la pédale de frein (9).

7. Système de freinage électrohydraulique selon la revendication 1, **caractérisé en ce que**, dans le cas d'un défaut de l'un des composants du système de freinage ou dans le cas d'une panne du calculateur électronique (ECU), la valve de décompression (4) est fermée.

8. Système de freinage électrohydraulique selon la revendication 1 ou 7, **caractérisé en ce que**, dans le cas d'un défaut de l'un des composants du système de freinage ou dans le cas d'une panne du calculateur électronique (ECU), lorsque l'on actionne la pédale de frein (9), la valve d'alimentation en pression (5) est ouverte.
